(19) **Europäisches Patentamt European Patent Office Office européen des brevets**

(11) **EP 1 130 078 B1**

(12) **FASCICULE DE BREVET EUROPEEN**

(45) Date de publication et mention
de la délivrance du brevet:
**11.04.2012 Bulletin 2012/15**

(51) Int Cl.:
***C10G 45/08*** *(2006.01)*

(21) Numéro de dépôt: **01400329.7**

(22) Date de dépôt: **09.02.2001**

(54) **Procédé de conversion d'hydrocarbures sur catalyseur à acidité controlée**

Kohlenwasserstofumwandlungsverfahren mittels eines Katalysators mit kontrollierter Azidität

Conversion of hydrocarbons on a catalyst having controlled acidity

(84) Etats contractants désignés:
**BE DE ES GB IT NL**

(30) Priorité: **23.02.2000 FR 0002284**

(43) Date de publication de la demande:
**05.09.2001 Bulletin 2001/36**

(73) Titulaire: **Institut Français du Pétrole
92852 Rueil-Malmaison Cedex (FR)**

(72) Inventeurs:
• **Harle, Virginie
60260 Lamorlaye (FR)**
• **Kressmann, Stéphane
69360 Serezin du Rhone (FR)**
• **Guibard, Isabelle
69360 Saint Symphorien d'Ozon (FR)**
• **Kasztelan, Slavik
92500 Rueil-Malmaison (FR)**
• **Morel, Frédéric
69340 Francheville (FR)**

(56) Documents cités:
**EP-A- 0 743 351    EP-A- 0 848 992**

**Description**

Il est connu que les catalyseurs de conversion d'hydrocarbures et notamment d'hydrotraitement de résidus se désactivent par dépôt de métaux, comme le sulfure de vanadium et le sulfure de nickel, et par dépôt de coke. Le dépôt de coke est connu pour être augmenté lorsque l'acidité du catalyseur augmente. EP-A-0 743 351 décrit un procédé de production des huiles lubrifiantes. EP-A-0 848 992 décrit un catalyseur contenant du bore et du silicium et son utilisation en hydrotraitement de charges hydrocarbonées.

La demanderesse a découvert de façon surprenante que l'utilisation de catalyseurs d'acidité contrôlée et le contrôle de l'enchaînement des catalyseurs de façon à utiliser en second le catalyseur le plus acide conduit à des performances bien meilleures. L'invention concerne donc un procédé de conversion d'hydrocarbures par exemple d'hydrotraitement, et plus particulièrement d'hydrodésulfuration de résidus préalablement partiellement démétallisé consistant à passer un résidu partiellement dé métallisé sur au moins un catalyseur d'acidité contrôlée. L'objet de l'invention est décrit dans le libellé de la revendication indépendante 1. D'autres aspects de l'invention sont décrits dans les libellés des revendications dépendantes deux à sept.

Les catalyseurs utilisés se caractérisent en ce que leur acidité est limitée et/ou que le rapport entre leur performance dans une réaction d'hydrogénation est largement supérieur à leur performance dans une réaction test d'acidité. Dans le cas où deux catalyseurs d'acidité contrôlée mais différente sont utilisés dans un ou plusieurs réacteurs, il est recommandé de les enchaîner de la façon suivante :

- si un seul des deux catalyseurs contient du cobalt, il est préférable de positionner celui-ci en amont du second catalyseur ne contenant pas de cobalt,
- si les deux ou aucun des deux catalyseurs ne contiennent de cobalt, il est préférable d'utiliser en second le catalyseur le plus acide et/ou de rapport hydrogénation/acidité le plus faible.

L'acidité et la performance en hydrogénation sont évaluées par un test catalytique d'un mélange de molécules modèles : l'hydrogénation du toluène et l'isomérisation du cyclohexane. Selon ce test décrit ci dessous et dans ces conditions de mesure, le niveau d'activité en isomérisation du cyclohexane devra être limité à 0,10 et le rapport d'activité hydrogénante/activité isomérisante devra être supérieur à 10.

Le test catalytique permettant de contrôler l'acidité des catalyseurs est réalisé selon le protocole suivant :

Les catalyseurs sont sulfurés in situ en dynamique dans un réacteur tubulaire à lit fixe traversé d'une unité pilote de type catatest (constructeur Vinci Technologies), les fluides circulant de haut en bas Les mesures d'activité hydrogénante et isomérisante sont effectuées immédiatement après la sulfuration sous pression sans remise à l'air avec la charge d'hydrocarbures qui a servi à sulfurer les catalyseurs.

La charge de sulfuration et de test est composée de 5,8 % de diméthyl disulfure (DMDS), 20 % de toluène et 74,2 % de cyclohexane en poids. On mesure ainsi les activités catalytiques stabilisées de volumes égaux de catalyseurs dans la réaction d'hydrogénation du toluène. Le suivi de l'isomérisation du cyclohexane, diluant du toluène, permet d'estimer l'acidité des catalyseurs.

Les conditions de mesure d'activité sont les suivantes (en considérant une vaporisation totale et la loi des gaz parfait) :

Pression totale : 6,0 MPa
Pression de toluène : 0,38 MPa
Pression de cyclohexane : 1,55 MPa
Pression d'hydrogène : 3,64 MPa
Pression d'$H_2S$ : 0,22 MPa
Volume de catalyseur : 40 cc
Débit de charge : 80 cc/h
Vitesse spatiale horaire : 2 1/l/h$^{-1}$
Débit d'hydrogène : 36 l/h
Température de sulfuration et de test : 350°C (3°C/min).

Des prélèvements de l'effluent liquide sont analysés par chromatographie en phase gazeuse. La détermination des concentrations molaire en toluène non converti (T) et des concentrations des produits d'hydrogénation : le méthyle cyclohexane (MCC6), l'éthyle cyclopentane (EtCC5) et les diméthyle cyclopentane (DMCC5) permettent de calculer un taux d'hydrogénation de toluène $X_{HYD}$ défini par :

$$X_{HYD} (\%) = 100 * (MCC6 + EtCC5 + DMCC5) / (T + MCC6 + EtCC5 + DMCC5)$$

Le taux d'isomérisation du cyclohexane $X_{ISO}$ est calculé de la même façon à partir des concentrations en cyclohexane non converti et de son produit de réaction, le méthyl cyclopentane La réaction d'hydrogénation du toluène et d'isomérisation du cyclohexane étant d'ordre 1 dans nos conditions de test et le réacteur se comportant comme un réacteur piston idéal, on calcule l'activité hydrogénante $A_{HYD}$ et isomérisante $A_{ISO}$ des catalyseurs en appliquant la formule : $Ai = ln(100/(100-X_i))$

Le rapport d'activité hydrogénante sur activité isomérisante H/A est égale à $A_{HYD}/A_{ISO}$

Les procédés d'hydrodésulfuration de la présente invention peuvent être appliqués par exemple aux fractions pétrolières telles que les pétroles bruts de degré API inférieur à 20, les extraits de sables bitumeux et de schistes bitumeux, les résidus atmosphériques, les résidus sous vide, les asphaltes, les huiles désasphaltées, les résidus sous vide désasphaltés, les bruts désasphaltés, les fuels lourds, les distillats atmosphériques et les distillats sous vide ou encore à d'autres hydrocarbures tels que les liquéfiats du charbon.

Les réactions d'hydroraffinage et d'hydroconversion de ces charges hydrocarbonnées (hydrotraitements) peuvent être réalisées dans un réacteur contenant le catalyseur disposé en lit fixe Une autre application de l'invention est l'utilisation de ces mêmes catalyseurs en lit bouillonnant, notamment dans le cadre des hydrotraitements.

Dans les procédés en lit fixe ou en lit bouillonnant, les hydrotraitements destinés à éliminer les impuretés telles que le soufre, l'azote, les métaux, et à abaisser le point d'ébullition moyen de ces hydrocarbures sont habituellement mis en oeuvre à une température de 320 à 470 degrés C, de préférence 350 à 450 degrés C, sous une pression partielle d'hydrogène de 3 MPa (méga Pascal) à 30 MPa, de préférence 5 à 20 Mpa, à une vitesse spatiale de 0,1 à 6 volumes de charge par volume de catalyseur et par heure, de préférence 0,2 à 2 volumes par volume de catalyseur et par heure, le rapport hydrogène gazeux sur charge liquide d'hydrocarbures étant compris entre 100 et 5000 normaux mètres cubes par mètre cube ($Nm^3/m^3$), de préférence entre 200 et 1500 ($Nm^3/m^3$).

Les catalyseurs utilisés dans la présente invention ont la composition suivante :

- au moins un métal du groupe VIB : 5 et 40% poids en oxyde, de préférence le molybdène ou le tungstène,
- au moins un métal du groupe VIII : 0,1 à 10% poids en oxyde choisi dans le groupe formé par le fer, le cobalt ou le nickel,
- au moins un support oxyde poreux tel que les alumines ou les silice-alumines. On préfère utiliser des supports contenant de l'alumine : 40 à 94,6 % poids d'un support oxyde par rapport à la masse totale du catalyseur,
- éventuellement au moins un dopant choisi dans le groupe constitué par le phosphore, le bore, le silicium et les halogènes : 0 à 10% poids au total de $P_2O_5$, $SiO_2$, $B_2O_3$ et/ou d'halogènes.

Les catalyseurs utilisés dans l'invention peuvent être préparés par toutes méthodes adéquates, et notamment par les méthodes décrites dans les brevets français N° 97/07149, 87/09 359, 96/15 622 ou encore 96/13 797. A titre d'exemple et sans en limiter la portée, le premier catalyseur, qui peut être de type NiCoMo sans dopant, peut être préparé par imprégnation d'une alumine par une solution aqueuse contenant un précurseur de molybdène, un précurseur de cobalt et un précurseur de nickel. Le second catalyseur, qui peut être de type NiMoP, peut être préparé, à titre d'exemple, par coimprégnation d'une alumine par une solution aqueuse contenant un précurseur de molybdène, un précurseur de nickel et un précurseur de phosphore.

Les métaux et les dopants éventuels peuvent être introduits à tout moment de la préparation notamment par imprégnation sur un support déjà formé ou introduits au cours de la synthèse du support.

Les catalyseurs décrits dans la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassée, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938) comprise entre 50 et 600 $m^2/g$, un volume poreux mesuré par porosimétrie au mercure compris entre 0,2 et 1,5 $cm^3/g$ et une distribution en taille de pores pouvant être monomodale, bimodale ou polymodale.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'Homme du métier consiste à chauffer le mélange de solides sous flux d'un mélange d'hydrogène et d'hydrogène sulfuré ou sous flux d'un mélange d'azote et d'hydrogène sulfuré à une température comprise entre 150 et 800°C, de préférence entre 250 et 600°C, généralement dans une zone réactionnelle à lit traversé.

La demanderesse a découvert que d'une manière surprenante le traitement d'une charge hydrocarbonée de type résidu de distillation, préalablement partiellement démétallisée, qui circule sur au moins un catalyseur d'acidité contrôlé ou successivement sur au moins deux catalyseurs d'acidité croissante ou de rapport hydrogénation/acidité décroissante, donnait de meilleures performances en hydrodésulfuration (HDS), hydrodéazotation (HDN) et hydrodécarbonisation (HDCCR) avec une plus faible désactivation et donc une meilleure durée de vie que l'utilisation d'un seul catalyseur d'acidité non contrôlée.

Les exemples ci dessous illustrent l'invention décrite sans toutefois en limiter la portée

Exemple 1 - Préparation du support alumine rentrant dans la composition des catalyseurs utilisés dans l'invention. :

nous avons fabriqué un support à base d'alumine en grande quantité de façon à pouvoir préparer les catalyseurs décrits ci-après à partir du même support mis en forme. Pour ce faire, nous avons utilisé une matrice composée de boehmite tabulaire ultrafine ou gel d'alumine commercialisée sous le nom SB3 par la société Condéa Chemie Gmbh. Ce gel a été mélangé à une solution aqueuse contenant de l'acide nitrique à 66 % (7 % poids d'acide par gramme de gel sec) puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5 % volume d'eau. On obtient ainsi des extrudés cylindriques de 1,2 mm de diamètre, ayant une surface spécifique de 243 $m^2$/g, un volume poreux de 0,61 $cm^3$/g et une distribution en taille de pore monomodale centrée sur 100 Å. L'analyse de la matrice par la diffraction des rayons X révèle que celle-ci est composée uniquement d'alumine gamma cubique de faible cristallinité.

Exemple 2 - Préparation du catalyseur A (NiCoMo/Al$_2$O$_3$) utilisé dans l'invention :

nous avons imprégné à sec le support extrudé de l'exemple 1 par une solution aqueuse renfermant des sels de molybdène, de cobalt et de nickel. Le sel de molybdène est l'heptamolybdate d'ammonium $Mo_7O_{24}(NH_4)_6$ $4H_2O$, celui de cobalt est le nitrate de cobalt $Co(NO_3)_2.6H_2O$ et celui de nickel est le nitrate de nickel $Ni(NO_3)_2.6H_2O$. Après maturation à température ambiante dans une atmosphère saturée en eau, les extrudés imprégnés sont séchés pendant une nuit à 120°C puis calcinés à 500°C pendant 2 heures sous air sec. La teneur finale en trioxyde de molybdène est de 14,5% poids du catalyseur fini. La teneur finale en oxyde de cobalt CoO est de 2,4% poids du catalyseur fini. La teneur finale en oxyde de nickel NiO est de 0,8 % poids du catalyseur. Le catalyseur A ainsi obtenu est représentatif d'un catalyseur conforme à cette invention (voir exemple 6).

Exemple 3 - Préparation du catalyseur B (NiMoP/alumine) utilisé dans l'invention :

nous avons imprégné à sec le support extrudé de l'exemple 1 par une solution aqueuse contenant l'heptamo-lybdate d'ammonium $Mo_7O_{24})_6.4H_2O$ et le nitrate de nickel $Ni(NO_3)_2.6H_2O$ auxquels on a ajouté de l'acide phosphorique $H_3PO_4$. Les mêmes étapes de maturation, séchage et calcination que pour la préparation du catalyseur A de l'exemple 2 ont été utilisées. La teneur finale en trioxyde de molybdène est de 16,0% du poids du catalyseur fini. La teneur finale en oxyde de nickel est de 4,0 % du poids du catalyseur fini. La teneur finale en phosphore, exprimée en pentaoxyde, est de 6 % du poids du catalyseur fini. Le catalyseur B ainsi obtenu est représentatif d'un catalyseur conforme à cette invention (voir exemple 6).

Exemple 4 - Préparation d'un catalyseur C (NiMoSi/alumine) utilisé dans l'invention :

nous avons imprégné à sec le support extrudé de l'exemple 1 par une solution aqueuse contenant l'heptamo-lybdate d'ammonium $Mo_7O_{24}(NH_4)_6.4H_2O$ et le nitrate de nickel $Ni(NO_3)_2.6H_2O$. Les étapes de maturation, séchage et calcination que pour la préparation du catalyseur A de l'exemple 2 ont été utilisées. Ce précurseur Ni Mo ainsi obtenu a été de nouveau imprégné mais cette fois par une solution aqueuse contenant l'émulsion de silicone Rhodorsyl EP1. La teneur finale en trioxyde de molybdène est de 14,0% du poids du catalyseur fini. La teneur finale en oxyde de nickel est de 3,4% du poids du catalyseur fini. La teneur finale en silicium, exprimée en SiO$_2$, est de 1,8 % du poids du catalyseur fini. Le catalyseur C ainsi obtenu est représentatif d'un catalyseur conforme à cette invention (voir exemple 6).

Exemple 5 - Préparation d'un catalyseur D (NiMoPSi/alumine nom utilisé dans à l'invention :

nous avons imprégné à sec le support extrudé de l'exemple 1 par une solution aqueuse contenant l'heptamo-lybdate d'ammonium $Mo_7O_{24}(NH_4)_6.4H_2O$ et le nitrate de nickel $Ni(NO_3)_2.6H_2O$ auxquels on a ajouté de l'acide phos-phorique $H_3PO_4$. Les mêmes étapes de maturation, séchage et calcination que pour la préparation du catalyseur A de l'exemple 2 ont été utilisées. Ce précurseur NiMoP ainsi obtenu a été de nouveau imprégné mais cette fois par une solution aqueuse contenant l'émulsion de silicone Rhodorsyl EP1. La teneur finale en trioxyde de molybdène est de 16,0% du poids du catalyseur fini. La teneur finale en oxyde de nickel est de 4% du poids du catalyseur fini. La teneur finale en phosphore, exprimée en pentaoxyde, est de 6 % du poids du catalyseur fini. La teneur finale en silicium, exprimée en $SiO_2$, est de 4 % du poids du catalyseur fini. Le catalyseur D ainsi obtenu est non conforme à l'invention (voir exemple 6).

Exemple 6 - Tests d'hydrogénation et d'acidité sur moldécules modèles : hydrogénation du toluène, isomérisation du cyclohexane :

les catalyseurs A à D, précédemment décrits, sont sulfurés in situ en dynamique dans le réacteur tubulaire à lit fixe traversé d'une unité pilote de type catatest (constructeur Vinci Technologies), les fluides circulant de haut en bas. Les mesures d'activité hydrogénante et isomérisante sont effectuées immédiatement après la sulfuration sous pression sans remise à l'air avec la charge d'hydrocarbures qui a servie à sulfurer les catalyseurs.

La charge de sulfuration et de test est composée de 5,8 % de diméthyl disulfure (DMDS), 20 % de toluène et 74,2 % de cyclohexane en poids. On mesure ainsi les activités catalytiques stabilisées de volumes égaux de catalyseurs A à D dans la réaction d'hydrogénation du toluène. Le suivi de l'isomérisation du cyclohexane, diluant du toluène, permet d'estimer l'acidité des catalyseurs.

Les conditions de mesure d'activité (basées sur une vaporisation totale et la loi des gaz parfaits) sont les suivantes :

Pression totale : 6,0 MPa
Pression de toluène : 0,38 MPa
Pression de cyclohexane : 1,55 MPa
Pression d'hydrogène : 3,64 MPa
Pression d'$H_2S$ : 0,22 MPa
Volume de catalyseur : 40 cc
Débit de charge : 80 cc/h
Vitesse spatiale horaire : 2 l/l/h$^{-1}$
Débit d'hydrogène : 36 l/h
Température de sulfuration et de test : 350°C (3°C/min).

Des prélèvements de l'effluent liquide sont analysés par chromatographie en phase gazeuse. La détermination des concentrations molaires en toluène non converti (T) et des concentrations des produits d'hydrogénation : le méthyl cyclohexane (MCC6), l'éthyle cyclopentane (EtCC5) et les diméthyl cyclopentane (DMCC5) permettent de calculer un taux d'hydrogénation de toluène $X_{HYD}$ défini par :

$$X_{HYD} (\%) = 100 * (MCC6 + EtCC5 + DMCC5) / (T + MCC6 + EtCC5 + DMCC5)$$

Le taux d'isomérisation du cyclohexane $X_{ISO}$ est calculé de la même façon à partir des concentrations en cyclohexane non converti et de son produit de réaction, le méthyl cyclopentane.

La réaction d'hydrogénation du toluène et d'isomérisation du cyclohexane étant d'ordre 1 dans nos conditions de test et le réacteur se comportant comme un réacteur piston idéal, on calcule l'activité hydrogénante $A_{HYD}$ et isomérisante $A_{ISO}$ des catalyseurs en applicant la formule :

$$A_i = \ln(100/(100-X_i)).$$

Le tableau 1 compare les activités hydrogénante et isomérisante des différents catalyseurs, ainsi que le rapport H/A défini par le rapport $A_{HYD}/A_{ISO}$ entre l'activité hydrogénante et l'activité isomérisante.

**Tableau 1 : Activités hydrogénantes et isomérisantes des catalyseurs A à D**

| Catalyseur | Formule | $A_{HYD}$ | $A_{ISO}$ | $A_{HYD}/A_{ISO}$ |
|---|---|---|---|---|
| A | NiCoMo/alumine | 0,50 | 0,005 | 100 |

(suite)

| Catalyseur | Formule | $A_{HYD}$ | $A_{ISO}$ | $A_{HYD}/A_{ISO}$ |
|---|---|---|---|---|
| B | NiMoP/alumine | 0,65 | 0,009 | 72 |
| C | NiMoSi/alumine | 0,78 | 0,011 | 71 |
| D | NiMoPSi/alumine | 0,60 | 0,11 | 5 |

Le tableau 1 montre que les catalyseurs A à C sont conformes au premier aspect de l'invention puisque l'activité en isomérisation est, dans ces conditions de mesure, inférieure à 0,10 et que le rapport entre l'activité hydrogénante et l'activité isomérisante, $A_{HYD}/A_{ISO}$, est supérieur à 10 A l'opposé, le catalyseur D est non conforme à l'invention puisque le rapport entre l'activité hydrogénante et l'activité isomérisante est inférieur à 10 et que son activité isomérisante est supérieure à 0,10.

Exemple 7 - Tests pilotes évaluant la performance en HDT de résidus pétroliers de distillation des catalyseurs A à D :

les catalyseurs A à D ont été évalués seuls ou enchaînés dans un test pilote d'hydrotraitement d'un résidu de distillation sous vide d'origine Arabe Léger, préalablement partiellement dé métallisé. Cette charge a préalablement été démétallisée dans une unité pilote en lit fixe par un catalyseur d'hydrotraitement, comme celui décrit par exemple dans le brevet français n° 97/07149.

Les principales caractéristiques de ce résidu démétallisé sont reportées dans le tableau 2 ci-dessous :

**Tableau 2 :Caractéristiques du résidu sous vide préalablement partiellement démétallisé**

| | Résidu sous vide démétallisé |
|---|---|
| Densité 15/4 | 0,989 |
| Soufre (% poids) | 2,3 |
| Ni (ppm poids) | 12 |
| V (ppm poids) | 18 |
| Asphaltènes C7 (% poids) | 3,9 |
| Carbon Conradson (% poids) | 14 |
| N (ppm poids) | 3600 |

On traite cette charge sur une unité pilote d'hydrotraitement de résidus pétroliers comportant deux réacteurs tubulaire en série contenant chacun un lit fixe de catalyseurs. Chaque réacteur peut être rempli avec 1 litre de catalyseur. L'écoulement des fluides (résidus pétrolier + hydrogène) est ascendant dans le réacteur.

Lorsque chaque catalyseur est évalué seul, seul le premier réacteur est chargé avec un litre de catalyseur. Lorsque l'enchaînement de catalyseurs est évalué, le premier catalyseur est chargé dans le premier réacteur et le deuxième catalyseur dans le second réacteur. Dans tous les cas, les débits de résidus et de gaz d'hydrogène sont ajustés de façon à maintenir constante la vitesse spatiale horaire du résidu et le rapport entre le débit du gaz et du liquide (tableau 3).

Après une étape de sulfuration par circulation dans les réacteurs d'une coupe distillat sous vide contenant 2% pds de soufre à une température finale de sulfuration de 350°C, on opère l'unité avec le résidu sous vide partiellement démétallisé décrit ci-dessus. Les conditions opératoires mises en oeuvre en début d'essai sont les suivantes :

**Tableau 3 : Conditions opératoires des tests pilotes**

| Pression Totale | 15 MPa |
|---|---|
| Température de début de cycle | 370°C |
| Vitesse spatiale horaire du résidu | 0,3 h$^{-1}$ |
| Recyclage d'hydrogène | 1000 Normauxlitres H$_2$/litre de charge |

Après 500 heures de stabilisation dans ces conditions, les performances en hydrodésulfuration (HDS), en hydrodémétallation (HDM), en réduction du Carbon Conradson (HDCCR) et en hydrodéazotation (HDN) sont mesurées et calculées selon la façon suivante :

$$\text{HDS (\% poids)} = ((\% \text{ poids S)charge} - (\% \text{poidsS)recette})/ \% \text{ poids S charge} * 100$$

$$\text{HDM (\% poids)} = ((\text{ppm poids Ni+V)charge} - (\text{ppm poids Ni+V)recette})/ \text{ ppm poids Ni+V charge} * 100$$

$$\text{HDCCR (\% poids)} = ((\% \text{ poids CCR)charge} - (\% \text{poidsCCR)recette})/ \% \text{ poids CCR charge} * 100$$

$$\text{HDN (\% poids)} = ((\text{ppm poids N)charge} - (\text{ppm poids N)recette})/ \text{ ppm poids N charge} * 100$$

Les performances obtenues au bout de 500 heures sur les catalyseurs sont les suivantes (tableau 4) :

**Tableau 4 : Performances au bout de 500 heures à 370°C**

| Système catalytique | HDS (% poids) | HDM (%poids) | HDCCR (% poids) | HDN (% poids) |
|---|---|---|---|---|
| Catalyseur A | 75,1 | 51,0 | 38,0 | 38,3 |
| Catalyseur B | 74,5 | 49,3 | 38.5 | 39,0 |
| Catalyseur C | 78,0 | 53,1 | 39,5 | 39,2 |
| Catalyseur D | 73,5 | 51,0 | 35,5 | 38,5 |
| Catalyseur A + B | 75,0 | 50,2 | 38,9 | 38,6 |
| Catalyseur A+ C | 76,5 | 52,1 | 39,0 | 38,2 |
| Catalyseur C+ A | 75,5 | 51,8 | 38,5 | 39,0 |

Après cette période de 500 heures, la conduite des essais est alors effectuée en visant à maintenir un taux d'HDS constant de 78 % poids tout au long du cycle. Ceci a pour but d'évaluer la stabilité relative des différents catalyseurs ou association de catalyseurs. Pour cela, on compense la désactivation du catalyseur en HDS par une augmentation progressive de la température réactionnelle.

Après une durée totale de marche de 2500 heures, les températures des réacteurs et les performances obtenues sont les suivantes (tableau 5) :

**Tableau 5 : Performances au bout de 2500 heures**

| Système catalytique | Température (°C) | HDS (% poids) | HDM (% poids) | HDCCR (% poids) | HDN (% poids) |
|---|---|---|---|---|---|
| Catalyseur A | 392 | 78 | 55,1 | 40,5 | 39,2 |
| Catalyseur B | 394 | 78 | 52,5 | 41,9 | 40,1 |
| Catalyseur C | 390 | 78 | 55,6 | 42,8 | 40,1 |
| Catalyseur D | 400 | 78 | 53,1 | 36,5 | 37,2 |
| Catalyseur A +B | 389 | 78 | 53,9 | 45,1 | 42,1 |

(suite)

| Système catalytique | Température (°C) | HDS (% poids) | HDM (% poids) | HDCCR (% poids) | HDN (% poids) |
|---|---|---|---|---|---|
| Catalyseur A + C | 386 | 78 | 53,8 | 45,0 | 41,5 |
| Catalyseur C + A | 391 | 78 | 55,3 | 41,5 | 39,9 |

Il apparaît que les catalyseurs A, B ou C répondant aux critères d'acidité définis dans ce brevet sont plus actifs initialement en raffinage, et surtout en HDS; ce n'est pas le cas du catalyseur D dont la balance hydrogénation/acidité et l'acidité ne répondent pas aux critères de l'invention. Cet intérêt est également observé, avec des écarts encore plus importants, après 2500 heures de fonctionnement, traduisant une plus grande stabilité dans le temps des catalyseurs répondant à ce critère

L'intérêt (deuxième aspect de l'invention) de faire circuler la charge sur au moins deux catalyseurs d'acidité croissante (A croissant et/ou H/A décroissant) est surtout visible au niveau de la stabilité : on observe que les associations A+B ou A+C sont plus performantes après 2500 heures de fonctionnement que les catalyseurs utilisés seuls et nettement plus performantes qu'un seul catalyseur, D utilisé seul, et ne répondant pas aux critères de l'invention. Ces observations ont été faites aussi bien au niveau de l'HDS qu'au niveau des taux d'HDCCR et d'HDN. Il en résulte un meilleur potentiel du produit hydrotraité en tant que charge d'une unité de craquage catalytique

Le positionnement du catalyseur le plus acide en premier (cas C+A) conduit à une performance initiale et à une stabilité de cette performance moindres par rapport à celles du système positionnant le catalyseur le moins acide en premier (cas A+C) comme cela est décrit dans l'invention.

A l'opposé, dans le cas où l'on fait circuler la charge sur un catalyseur présentant une acidité élevée et une balance hydrogénation/acidité faible (catalyseur D), il apparaît nécessaire d'augmenter très fortement la température (400°C) pour maintenir un taux d'HDS de 78%. Ainsi, ce type de catalyseur ne conduit d'une part ni à une performance élevée en début de cycle, ni à une stabilité compatible avec une durée de cycle satisfaisante.

**Revendications**

1. Procédé de conversion d'hydrocarbures appliqué aux hydrotraitements d'une charge d'hydrocarbures, en présence d'au moins deux lits catalytiques de catalyseurs d'acidité contrôlée, **caractérisé en ce que** le niveau d'activité des dits catalyseurs en isomérisation est inférieur à 0,10 et **en ce que** le rapport d'activité hydrogénante sur activité isomérisante est supérieur à 10, lesdites activités étant évaluées par un test catalytique d'un mélange de molécules modèles : l'hydrogénation du toluène et l'isomérisation du cyclohexane dans les conditions suivantes (en considérant une vaporisation totale et la loi des gaz parfait) :

les catalyseurs sont sulfurés in situ en dynamique dans un réacteur tubulaire à lit fixe traversé d'une unité pilote de type catatest, les fluides circulant de haut en bas, les mesures d'activité hydrogénante étant isomérisante sont effectuées immédiatement après la sulfuration sous pression sans remise à l'air avec la charge d'hydrocarbures qui a servi à sulfurer les catalyseurs, la charge de sulfuration et de test étant composée de 5,8 % de diméthyl disulfure (DMDS), 20 % de toluène et 74,2 % de cyclohexane en poids, les activités catalytiques stabilisées de volumes égaux de catalyseurs dans la réaction d'hydrogénation du toluène étant ainsi mesurée, le suivi de l'isomérisation du cyclohexane, diluant du toluène, permettant d'estimer l'acidité des catalyseurs,

Pression totale : 6,0 MPa
Pression de toluène : 0,38 MPa
Pression de cyclohexane : 1,55 MPa
Pression d'hydrogène : 3,64 MPa
Pression d'H2S : 0,22 MPa
Volume de catalyseur : 40 cc
Débit de charge : 80 cc/h
Vitesse spatiale horaire : 2 l/l/h$^{-1}$
Débit d'hydrogène : 36 l/h
Température de sulfuration et de test : 350°C (3°C/min).

dans lequel des prélèvements de l'effluent liquide sont analysés par chromatographie en phase gazeuse et dans lequel la détermination des concentrations molaire en toluène non converti (T) et des concentrations des produits d'hydrogénation , le méthyle cyclohexane (MCC6), l'éthyle cyclopentane (EtCC5) et les diméthyle cyclopentane (DMCC5) permettent de calculer un taux d'hydrogénation de toluène XHYD défini par :

$$XHYD\ (\%) = 100 * (MCC6 + EtCC5 + DMCC5) / (T + MCC6 + EtCC5 + DMCC5)$$

et un taux d'isomérisation du cyclohexane XISO calculé de la même façon à partir des concentrations en cyclohexane non converti et de son produit de réaction, le méthyl cyclopentane, l'activité hydrogénante AHYD et isomérisante AISO des catalyseurs étant calculée en appliquant la formule : $Ai = ln(100/(100-Xi))$, ledit procédé étant également **caractérisé en ce que** la charge circule successivement sur au moins deux lits catalytiques de catalyseurs, et **en ce que** le premier catalyseur :

- est celui qui contient du cobalt si les autres n'en contiennent pas,
- ou est celui qui a l'acidité inférieure et/ou le rapport d'activité hydrogénante sur activité isomérisante supérieur dans le cas où tous les catalyseurs contiennent du cobalt ou dans le cas où aucun catalyseur ne contient du cobalt,

et **en ce que** les catalyseurs comprennent :

- au moins un métal du groupe VIB, de 5 à 40% poids d'oxyde,
- au moins un métal du groupe VIII choisi dans le groupe formé par le Fer, le Cobalt ou le Nickel, de 0,1 à 10% poids en oxyde,
- au moins un support oxyde poreux,
- et éventuellement au moins un dopant choisi dans le groupe constitué par le phosphore, le bore, le silicium et les halogènes : de 0 à 10% poids au total de $P_2O_5$, $SiO_2$, $B_2O_3$ et/ou d'halogènes.

**2.** Procédé selon la revendication 1 effectué dans au moins un réacteur à lit fixe.

**3.** Procédé selon la revendication 1 effectué dans au moins un réacteur à lit bouillonnant

**4.** Procédé selon l'une des revendications 1 à 3 dans lequel deux catalyseurs d'acidité contrôlée mais différente sont utilisés dans un ou plusieurs réacteurs.

**5.** Procédé selon l'une des revendications 1 à 4 appliqué aux fractions pétrolières telles que les pétroles bruts de degré API inférieur à 20, les extraits de sables bitumeux et de schistes bitumeux, les résidus atmosphériques, les résidus sous vide, les asphaltes, les huiles désasphaltées, les résidus sous vide désasphaltés, les bruts désasphaltés, les fuels lourds, les distillats atmosphériques et les distillats sous vide ou encore à d'autres hydrocarbures tels que les liquéfiats du charbon.

**6.** Procédé selon l'une des revendications 1 à 5 en présence de deux catalyseurs, le premier catalyseur étant un catalyseur de type NiCoMo sans dopant et le second catalyseur étant un catalyseur de type NiMoP.

**7.** Procédé selon l'une des revendications 1 à 5 en présence de deux catalyseurs, le premier catalyseur étant un catalyseur NiCoMo sur alumine et le second catalyseur étant un catalyseur NiMoSi sur alumine.

**Claims**

**1.** A process for the conversion of hydrocarbons applied to hydrotreatments for a hydrocarbon feed in the presence of at least two catalytic beds of catalysts with a controlled acidity, **characterized in that** the degree of activity of said catalysts in respect of isomerization is less than 0.10 and **in that** the ratio of the hydrogenating activity to the isomerizing activity is more than 10, said activities being evaluated by a catalytic test on a mixture of model molecules: the hydrogenation of toluene and the isomerization of cyclohexane under the following conditions (assuming complete vaporization and the perfect gas law):

the catalysts are sulphurized dynamically in situ in a traversed fixed bed tubular reactor in a Catatest type pilot unit, the fluids moving from top to bottom, the measurements of hydrogenating activity, being isomerizing, being carried out immediately after sulphurizing under pressure without the ingress of air with the hydrocarbon feed which has been used to sulphurize the catalysts, the sulphurization and test feed being composed of 5.8% of dimethyldisulphide (DMDS), 20% of toluene and 74.2% of cyclohexane by weight, the stabilized catalytic activities of equal volumes of catalysts in the toluene hydrogenation reaction thus being measured, while monitoring the isomerization of cyclohexane, diluting the toluene, allowing the acidity of the catalysts to be estimated;

| | |
|---|---|
| total pressure: | 6.0 MPa; |
| toluene pressure: | 0.38 MPa; |
| cyclohexane pressure: | 1.55 MPa; |
| hydrogen pressure: | 3.64 MPa; |
| $H_2S$ pressure: | 0.22 MPa; |
| volume of catalyst: | 40 cc; |
| flow rate of feed: | 80 cc/h; |
| hourly space velocity: | 2 l/l/h; |
| hydrogen flow rate: | 36 l/h |
| sulphurization and test temperature: | 350°C (3°C/min); |

in which samples of the liquid effluent are analyzed by gas chromatography and in which the molar concentrations of unconverted toluene (T) and the concentrations of the hydrogenation products: methyl cyclohexane (MCC6), ethyl cyclopentane (EtCC5) and dimethyl cyclopentanes (DMCC5) are determined to allow calculation of a degree of toluene hydrogenation, XHYD, defined by:

$$XHYD (\%) = 100 \times (MCC6 + EtCC5 + DMCC5)/(T + MCC6 + EtCC5 + DMCC5)$$

and a degree of cyclohexane isomerization, XISO, is determined, calculated in the same manner from the concentrations of unconverted cyclohexane and its reaction product, methyl cyclopentane, the hydrogenating activity, AHYD, and isomerizing activity, AISO, of the catalysts being calculated by applying the formula: Ai = ln(100/(100 - Xi)), said process also being **characterized in that** the feed moves in succession over at least two catalytic beds of catalyst, and **in that** the first catalyst:

• is that which contains cobalt if the others do not contain any;
• or is that which has the lower acidity and/or the higher ratio of hydrogenating activity to isomerizing activity in the case in which all of the catalysts contain cobalt or in the case in which no catalyst contains cobalt;

and **in that** the catalysts comprise:

• at least one metal from group VIB, <u>containing 5% to 40% by weight of oxide</u>;
• at least one metal from group VIII selected from the group formed by iron, cobalt and nickel, <u>containing 0.1% to 10% by weight of oxide</u>;
• at least one porous oxide support;
• and optionally at least one dopant selected from the group constituted by phosphorus, boron, silicon and the halogens: <u>containing 0 to 10% of the total weight of $P_2O_5$, $SiO_2$, $B_2O_3$ and/or halogens</u>.

2. A process according to claim 1, carried out in at least one fixed bed reactor.

3. A process according to claim 1, carried out in at least one ebullated bed reactor.

4. A process according to one of claims 1 to 3, in which two catalysts with controlled but different acidities are used in one or more reactors.

5. A process according to one of claims 1 to 4, applied to oil fractions such as crude oils with an API of less than 20, bituminous sand extracts and bituminous schists, atmospheric residues, vacuum residues, asphalts, deasphalted oils, deasphalted vacuum residues, deasphalted crudes, heavy fuels, atmospheric distillates and vacuum distillates or other hydrocarbons such as liquefied coal.

6. A process according to one of claims 1 to 5, carried out in the presence of two catalysts, the first catalyst being a catalyst of the NiCoMo type with no dopant and the second catalyst being a NiMoP type catalyst.

7. A process according to one of claims 1 to 5, carried out in the presence of two catalysts, the first catalyst being a NiCoMo on alumina catalyst and the second catalyst being a <u>NiMoSi</u> on alumina catalyst.

**Patentansprüche**

1. Verfahren zur Kohlenwasserstoffumwandlung, angewendet auf Hydrobehandlungen einer Kohlenwasserstoffbeschickung, in Gegenwart von mindestens zwei Katalysatorbetten mit Katalysatoren mit kontrollierter Azidität, **dadurch gekennzeichnet, dass** das Isomerisierungsaktivitätsniveau der Katalysatoren kleiner als 0,10 ist und **dadurch**, dass das Verhältnis von Hydrierungsaktivität zu Isomerisierungsaktivität größer als 10 ist, wobei die Aktivitäten durch einen Katalysetest eines Gemischs aus Modellmolekülen ermittelt werden: der Toluenhydrierung und der Cyclohexanisomerisierung unter den folgenden Bedingungen: (unter Beachtung vollständiger Verdampfung und des idealen Gasgesetzes):

    die Katalysatoren werden in situ unter dynamischen Bedingungen in einem durchströmten Festbettröhrenreaktor einer Piloteinheit vom Typ Catatest sulfuriert, wobei die Fluide von oben nach unten zirkulieren, wobei die Messungen der Hydrierungs- und Isomerisierungsaktivität unmittelbar nach der Sulfurierung unter Druck durchgeführt werden, ohne dass die Kohlenwasserstoffbeschickung erneut Luft ausgesetzt würde, die dazu gedient hat, die Katalysatoren zu sulfurieren, wobei die Sulfurierungsbeschickung und die Testbeschickung aus 5,8 Gew.-% Dimethyldisulfid (DMDS), 20 Gew.-% Toluen und 74,2 Gew.-% Cyclohexan bestehen, wobei die stabilisierten katalytischen Aktivitäten gleicher Katalysatorvolumina so in der Hydrierungsreaktion des Toluens gemessen werden, wobei es die Überwachung der Isomerisierung des -Cyclohexans, das ein Verdünnungsmittel des Toluens ist, ermöglicht, die Azidität der Katalysatoren zu ermitteln,
    Gesamtdruck: 6,0 MPa
    Toluendruck: 0,38 MPa
    Cyclohexandruck: 1,55 MPa
    Wasserstoffdruck: 3,64 MPa
    $H_2S$-Druck: 0,22 MPa
    Katalysatorvolumen: 40 $cm^3$
    Durchflussmenge der Beschickung: 80 $cm^3$
    Raumgeschwindigkeit pro Stunde: 2 l/l/h$^{-1}$
    Wasserstoffdurchflussmenge: 36 l/h
    Sulfurierungs- und Testtemperatur: 350 °C (3 °C/Min.).
    wobei Proben aus dem flüssigen Abfluss mittels Gasphasenchromatographie analysiert werden und wobei die Bestimmung der Molkonzentrationen an nicht umgewandeltem Toluen (T) und der Konzentrationen der Hydrierungsprodukte: Methylcyclohexan (MCC6), Ethylcyclopentan (EtCC5) und Dimethylcyclopentan (DMCC5) es ermöglichen, eine Toluenhydrierungsrate $X_{HYD}$ zu berechnen, die definiert ist durch:

$$X_{HYD}\,(\%) = 100 * (MCC6 + EtCC5 + DMCC5) / (T + MCC6 + EtCC5 + DMCC5)$$

und eine Cyclohexanisomerisierungsrate $X_{ISO}$, die auf die gleiche Weise aus Konzentrationen an nicht umgewandeltem Cyclohexan und dessen Reaktionsprodukt, Methylcyclopentan, berechnet wird, wobei die Hydrierungsaktivität $A_{HYD}$ und die Isomerisierungsaktivität $A_{ISO}$ der Katalysatoren berechnet wird, indem die Formel: $A_i = \ln(100/(100-X_i))$ angewendet wird, wobei das Verfahren ebenfalls **dadurch gekennzeichnet ist, dass** die Beschickung nacheinander auf mindestens zwei Katalysatorbetten der Katalysatoren zirkuliert, und **dadurch**, dass der erste Katalysator:

    - derjenige ist, der Cobalt enthält, wenn die anderen kein Cobalt enthalten,
    - oder derjenige ist, der eine Azidität aufweist, die kleiner ist und/oder bei dem das Verhältnis von Hydrierungsaktivität zu Isomerisierungsaktivität größer ist, falls alle Katalysatoren Cobalt enthalten, oder falls kein Katalysator Cobalt enthält,

und **dadurch**, dass die Katalysatoren Folgendes umfassen:

    - mindestens ein Metall der Gruppe VIB, <u>mit 5 bis 40 Gew.-% Oxid,</u>

- mindestens ein Metall der Gruppe VIII, ausgewählt aus der Gruppe gebildet aus Eisen, Cobalt oder Nickel, mit 0.1 bis 10 Gew.-% Oxid,
- mindestens einen porösen Oxidträger,
- und gegebenenfalls mindestens ein Dotierungsmittel, ausgewählt aus der Gruppe bestehend aus Phosphor, Bor, Silicium und den Halogenen: mit 0 bis 10 Gew.-% insgesamt an $P_2O_5$, $SIO_2$, $B_2O_3$ und/oder Halogene.

2. Verfahren nach Anspruch 1, das in mindestens einem Festbettreaktor durchgeführt wird.

3. Verfahren nach Anspruch 1, das in mindestens einem Wirbelbettreaktor durchgeführt wird.

4. Verfahren nach einem der Ansprüche 1 bis 3, wobei zwei Katalysatoren mit kontrollierter, aber verschiedener Azidität in einem oder mehreren Reaktoren verwendet werden.

5. Verfahren nach einem der Ansprüche 1 bis 4, das auf Erdölfraktionen, wie etwa Rohöle mit einem API-Grad von weniger als 20, Ölsand- und Ölschieferextrakte, atmosphärische Rückstände, Vakuumrückstände, Asphalte, entasphaltierte Öle, entasphaltierte Vakuumrückstände, entasphaltierte Rohöle, schwere Heizöle, atmosphärische Destillate und Vakuumdestillate oder auch andere Kohlenwasserstoffe, wie etwa verflüssigte Kohle, angewendet wird.

6. Verfahren nach einem der Ansprüche 1 bis 5 in Gegenwart von zwei Katalysatoren, wobei der erste Katalysator ein Katalysator vom NiCoMo-Typ ohne Dotierungsmittel ist und der zweite Katalysator ein Katalysator vom NiMoP-Typ ist.

7. Verfahren nach einem der Ansprüche 1 bis 5 in Gegenwart von zwei Katalysatoren, wobei der erste Katalysator ein NiCoMo-Katalysator auf Aluminiumoxid ist und der zweite Katalysator NiMoP-Katalysator auf Aluminiumoxid ist.

**EP 1 130 078 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0743351 A
- EP 0848992 A
- FR 9707149
- FR 8709359
- FR 9615622
- FR 9613797

**Littérature non-brevet citée dans la description**

- **Brunauer ; Emmett ; Teller.** *J. Am. Chem. Soc.,* 1938, vol. 60, 309-316